Europäisches Patentamt

European Patent Office

Office européen des brevets

(11) Publication number: **0 190 772 B1**

# (12) EUROPEAN PATENT SPECIFICATION

(45) Date of publication of patent specification: **08.05.91**

(21) Application number: **86102167.3**

(22) Date of filing: **15.11.83**

(51) Int. Cl.$^5$: **H01M 4/66, H01M 4/96, H01B 1/24**

(60) Publication number of the earlier application in accordance with Art.76 EPC: **0 109 824**

(54) Electrically conductive plastics material.

(30) Priority: **17.11.82 JP 200383/82**
**27.12.82 JP 227117/82**
**19.01.83 JP 5795/83**
**27.01.83 JP 10572/83**

(43) Date of publication of application:
**13.08.86 Bulletin 86/33**

(45) Publication of the grant of the patent:
**08.05.91 Bulletin 91/19**

(84) Designated Contracting States:
**AT DE GB SE**

(56) References cited:
**DE-A- 2 440 630**
**DE-A- 2 524 640**
**US-A- 4 169 819**

(73) Proprietor: **Kabushiki Kaisha Meidensha**
**1-17, Ohsaki 2-chome**
**Shinagawa-ku Tokyo 141(JP)**

(72) Inventor: **Yonahara, Kunio**
**2-25-401 Wakabadai Asahi-ku**
**Yokohama-shi Kanagawa-ken(JP)**
Inventor: **Miyogawa, Hiroshi**
**6-2-303 Namiki-2-chome Kanazawa-ku**
**Yokohama-shi Kanagawa-ken(JP)**
Inventor: **Aimoto, Shingo**
**4-1-3-942 Ojima Koto-ku**
**Tokyo(JP)**
Inventor: **Fushimi, Kazuo**
**6969-4 Shiba**
**Kawaguchi-shi Saitama-ken(JP)**
Inventor: **Tsunakawa, Hirokazu**
**418 Hideyasu Kisaimachi**
**Kita-Saitama-gun Saitama-ken(JP)**

(74) Representative: **Marsh, Roy David et al**
**Urquhart-Dykes & Lord Midsummer House**
**411C Midsummer Boulevard**
**Central Milton Keynes MK9 3BN(GB)**

**Description**

This invention relates to an electrically-conducting plastics material which has a relatively high electrical conductivity but without the inclusion of a metallic content, and more particularly to such an electrically-conductive plastics material used as an electrode in metal-halogen batteries.

Electrically-conductive plastics complex materials are already in use as electrodes for recently developed metal-halogen batteries.

These materials have been used in the form of molded pieces or synthetic resin paint. They are usually manufactured simply by dispersing fine powders of Ag, Cu, Al, or like metals, or fine carbon particles, within a synthetic resin matrix. This can cause their electrical conductivity to fluctuate widely because of non-homogeneous dispersion of the conducting particles. In addition, it has not been possible to increase the electrical conductivity beyond a certain limit (of the order of $10^4$ to $10^5$ ohm$^{-1}$ cm$^{-1}$). This represents an unavoidable limitation on the application of these electrically-conductive plastics materials.

Recently, it has been proposed to make use of certain dopants that may affect polyacetylene, polypyrrole or polyparaphenylene sulphide so as to make them electrically conductive. However, the resulting material tends to have unstable physical properties and the apparatus for producing it complicated.

In general, insulating materials such as plastics have a volume resistivity higher than $10^8$ ohm cm, semiconductors such as Ge, Si, carbon black or graphite have a volume resistivity of from $10^{-3}$ to $10^8$ ohm cm, and conductors such as metal have a volume resistivity of less than $10^{-3}$ ohm cm.

The volume resistivities of these materials change with temperature.

More specifically, the volume resistivity of the insulating materials generally decreases with rise in temperature, while that of the semiconductors and that of conductors increases with rise in temperature. An electrically conductive material obtained by kneading carbon black into a polymer matrix is lightweight and low in cost but exhibits good workability. Hence it is employed in a variety of electrical devices. However, the volume resistivity of this material also tends to increase with rise in temperature. Accordingly, electrical or electronic devices which make use of such a carbon black resin matrix material undergo changes in their properties with variation of temperature, and hence are not capable of keeping constant properties.

The plastics materials used in electrolytes (electrolytic solutions) tend to be affected by materials produced upon electrolysis and thus undergo chemical degradation. This tendency is especially marked in cases wherein the substances produced upon electrolysis are halogen group elements such as chlorine or bromine.

The term "electrolytic solution" as used in the present specification is intended to comprehend an electrolyte used in a storage battery as well as an electrolyte of a dry battery or one used in electroplating. It is an aqueous solution of compounds of a halogen group element selected from F, Cl, Br and I with at least one alkali or alkali earth metal such as Li, Be, Na, Mg, K, Ca, Rb, Sr, Cs or Ba in addition to metals such as Zn, Cu, Ni, Co, Fe, Mn, Cr, Sn, Pb, Pt, Hg, Cd, Ag or Pd.

The present materials may also be used with electrolytes from which strong acid groups, substances that extract hydrogen from hydrocarbons in the plastics material, strongly reductive agents, or compounds such as strong alkali that may act as hydrolytic agent, such that, for example, O, $O_2$, $O_3$, S, $SO_2$, $SO_3$, $SO_4$, $ClO_3$, $CrO_3$, OH, $O_2H$ or $MNO_3$ are produced upon decomposition of the electrolytes.

In general, when dipped in these electrolytes or exposed in chlorine or bromine liquids for accelerated degradative tests, the plastics material may become swollen in a short period and broken up into pieces which is extremely undesirable from the standpoint of dimensional stability and mechanical strength.

From this behaviour it can be inferred that the plastics material is subject to molecular cleavage or disruption when acted on by electrolytic products such as chlorine or bromine thus leading finally to failure of the material.

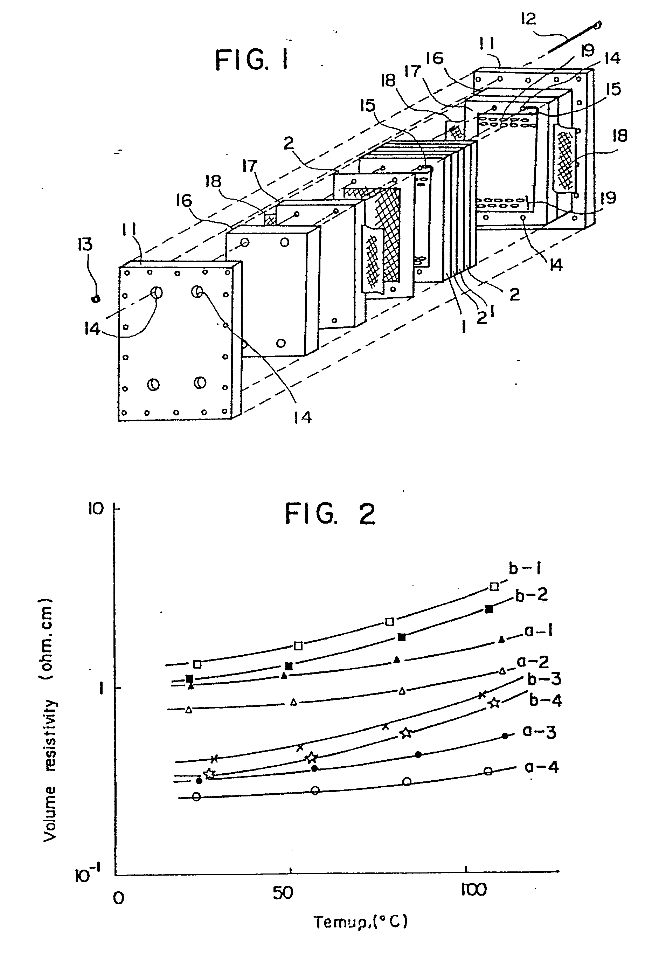

In recent years, the necessity for more effective energy utilization has led to development of a novel type battery which makes use of metal and a halogen as the active materials. An example of such a metal-halogen battery is shown in the accompanying Fig. 1 which is an exploded perspective view of a laminated or stacked structure of a metal-halogen secondary battery through which the electrolyte is circulated.

In Fig. 1, electrodes 1 of the bipolar type and separators 2 are stacked as shown and clamped on both sides by aluminium clamping end plates 11. The electrodes and separators are united together in a stack by bolts 12 and nuts 13. The electrolyte is supplied from a manifold 14 through a channel 15 and a microchannel 19 to the electrode surface and kept in circulation by means not shown.

In the drawing, the numeral 16 designates a plastics clamping end plate, the numeral 17 an electrode end plate and the numeral 18 a terminal in the form of a wire net.

The aforementioned metal-halogen battery makes use of monovalent alkali metals such as Li, Na or K or divalent metals such as Zn, Cd, Ni, Co or Fe as metals, Cl, Br or I as halogen and aqueous or nonaqueous solutions as electrolyte. So far, the electrodes comprising a mixture of a synthetic resin material and electrically-conductive particulate substances such as metal powders or carbon powders have been used in connection with aforementioned metal-halogen batteries because these electrodes can be fabricated at lower costs into desired shape because of improved formability of the aforementioned mixture and are excellent in halogen durability. However, these electrodes are defective in that halogen diffuses over a long period of use from one towards the other side of the electrode, which diffusion causes self-discharge and loss of function of the storage batteries. Thus, when the halogen penetrates through the electrode, problems are caused such as i) the outer battery casing is damaged by corrosive action; ii) the energy efficiency of the battery is reduced in proportion to the degree of penetration of the halogen; iii) above all, the bipolar type battery is subject to self-discharge due to halogen penetration; and iv) the electrode may be degraded by halogen diffusion in the electrolyte.

In sum, the conventional electrically-conductive plastics material is defective in that its volume resistivity is high and changes in accordance with variation of temperature; the constituting molecules of the matrix material are subject to disruption or cleavage in the electrolyte thus leading to failure of the material; and, when the material is used as an electrode of a metal-halogen secondary battery and used in an electrolyte, halogen penetration from one side to the other side of electrode may result in self-discharge and battery failure.

It is therefore a primary object of the present invention to provide an electrically-conductive commercially viable plastics material which is free from the defects of the conventional material and exhibits a high electrical conductivity and mechanical strength and in which volume resistivity is not affected by variation of temperature.

It is a further object of the present invention to provide such material that has a long life and is not degraded by electrolytes with lapse of time.

It is a further object of the present invention to provide an electrode for a metal-halogen battery in which the penetration of halogen as active material through the electrode is at least reduced and preferably is only very slight.

The present invention provides an electrode for a metal-halogen battery as claimed in claim 1, hereinbelow.

Preferably, the graphite used as inorganic filler is graphite treated by a dopant. The active carbon is added to and mixed with the graphite, the resulting mixture being incorporated into the resin as matrix, to form an electrically-conductive plastics material product. The resulting formed article is for use as an electrode or other component of a metal halogen battery. Other substances may be included as an inorganic filler besides graphite, for example, calcium carbonate, talcum, alumina, silica and titania.

In the accompanying drawings:

Fig. 1 is an exploded perspective view showing the stacked structure of the metal-halogen secondary battery through which there is circulation of electrolyte;

Fig. 2 is a graphic chart showing temperature characteristics of the volume resistivity for the Examples of the present invention, and comparative Examples, given herein below;

Fig. 3 is a diagrammatic view showing a unit for measuring bromine penetration; and

Fig. 4 is a graphic chart showing the extent of bromine penetration through the plastics electrodes of the Examples, as it varies with time.

Halogen durability of the present materials may be improved by using as the base synthetic resin material a polyethylene with a density higher than 0.94 $g/cm^3$, a polypropylene with a density higher than 0.90 $g/cm^3$ or an ethylene-propylene copolymer with a density higher than 0.90 $g/cm^3$.

An electrically-conductive carbon black, various products resulting from incomplete combustion or heat cracking of natural gas or liquid hydrocarbons may be used. However, most preferred are electrically-conductive carbon blacks having a particle size in a range of from 30 to 46 nm, a surface area in a range of from 245 to 1000 $m^2/g$, a volatile matter content in a range of from 1 to 1.5 weight percent, a pH in a range of from 7.0 to 9.5 and a DVP oil absorption in a range of from 160 to 340 ml/100 g.

Although graphite can be used as it is, the electrical conductivity of the material may be further improved if the graphite used is doped graphite.

Among dopants which may be used for this purpose are bromine, iodine, iodine chloride, iodine bromide, sulphuric acid, nitric acid and arsenic(V) fluoride.

The active carbon added can be powdered or granulated active carbon such as pelletized, crushed, granulated powder or spherical carbon particles activated with chemicals or steam.

In consideration of the shortcomings of the aforementioned conventional electrically-conductive plastics materials, the present inventors conducted repeated researches into various compositions of the synthetic base resin material (A), electrically-conductive carbon black (B) and a variety of inorganic fillers (C). These mixtures were kneaded in a mixer or roll kneader, and then formed by a conventional forming machine to a desired shape and the properties of these formed pieces were measured. The present invention has been completed on the basis of the information derived from these experiments, and resides in an electrically conductive plastic complex material comprising a synthetic base resin material (component A), electrically-conductive carbon black (component B) and inorganic filler (component C) comprising graphite, said electrically-conductive plastics material being used as an electrode.

The Examples show it to be preferred for there to be from 45 to 65 wt. percent of the component A, and 5 to 65 wt. percent and preferably 15 to 65 wt. percent and most preferably 15 to 50 wt. percent of the component C, related to the total of the components. With less than 30% of component A, the resulting material is lowered in pliability and mechanical strength. With more than 80% of component A, it is not possible to realize sufficient electrical conductivity.

The electrically-conductive plastics material of the aforementioned composition can be manufactured by using conventional forming apparatus. It is endowed with excellent formability and electrical conductivity without significantly having loss of mechanical strength.

The electrically-conductive carbon (component C) is preferably in the range of 5 to 50 wt. percent because the electrical conductivity of the plastics material falls as the carbon content falls below 5 wt. percent. The material becomes difficult to form as the carbon content goes higher than 50 wt. percent.

The electrically-conductive plastics material of the present invention is not substantially temperature-affected in its volume resistivity so that the electric or electronic devices made from this material also exhibit stable performance in spite of occasional variation of temperature.

The present inventors conducted research into possible additives that would enable the ultimate plastics material to be more resistant to electrolyte attack. They selected a zinc bromide aqueous solution as the electrolyte because it produces bromine (which is most aggressive) and also because it may be present as bromine aqueous solution when electrolyzed. A variety of polyolefins have been tested as to their durability to electrolytic products.

It is seen from the Examples and comparative Examples below that an electrically-conductive plastics material comprising a mixture of a synthetic base resin material, electrically conductive carbon black and at least one of calcium carbonate, talcum, alumina, silica and titania as inorganic filler shows extremely divergent properties depending on whether the polyolefin (polyethylene) density lies above or below a critical value of 0.94 g/cm$^3$.

From this it has been concluded that the durability of polyolefin to chemicals is closely related to the degree of crystallinity of the polyolefin employed and remains unaffected by the particular polymer type (such as block polymer or random polymer) and that the aforementioned critical effects may be derived solely by regulating the density of the synthetic base resin material.

Thus, the higher the density of the polyolefin employed, the better will be the durability of the resulting material in the presence of electrolytic products. However, as the polyolefin density increases, the rate of increase in stability of the product material gradually falls. On the other hand, the formability of the product material falls with increase in density. Therefore it is in practice desirable that, for polyethylene, polyolefin density be in a range of from about 0.94 g/cm$^3$ to 0.98 g/cm$^3$.

It may be preferable to maintain the relative properties of polyolefin, electrically conductive carbon black and inorganic filler in ranges of from 18 to 50, from 1 to 25 and from 25 to 75 wt. percent, respectively.

The present inventors conducted repeated researches into compositions of electrode materials capable of obviating the aforementioned deficiency in the use of the carbon-plastics electrodes in metal-halogen batteries. It has emerged from these researches that the electrode formed by an electrically conductive plastics material comprised of a basic composition (carbon-plastics composition) of a synthetic base resin material, carbon black and graphite and highly adsorptive active carbon operative to inhibit diffusion into the electrode of the active material (halogen) is effective to drastically reduce halogen diffusion while also reducing an electrical resistivity of the electrode as compared with the conventional carbon-plastics electrode and markedly improving the energy efficiency of the storage battery.

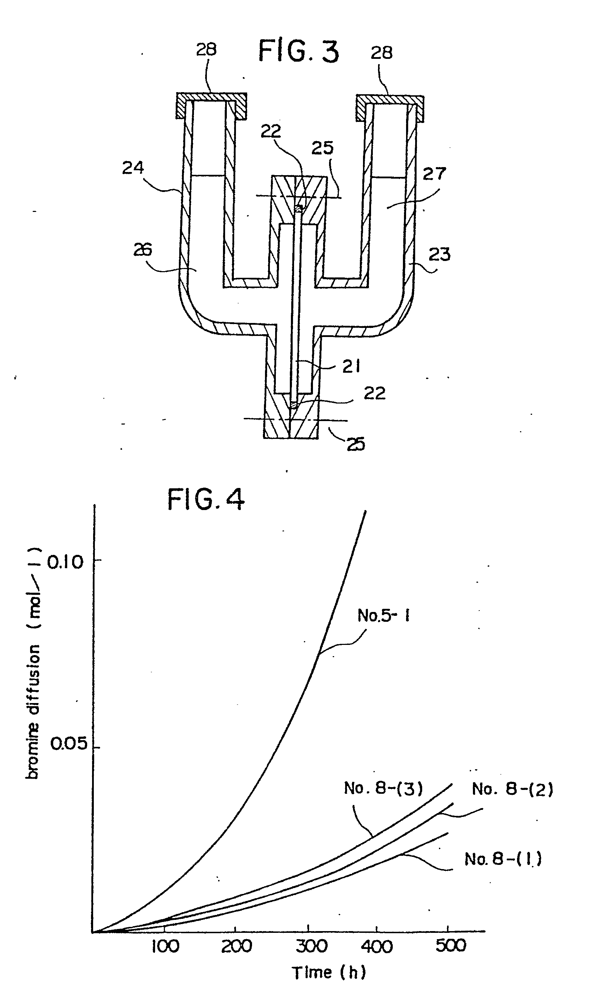

The electrode according to the present invention composed of electrically-conductive plastics material may be obtained by using active carbon as an adsorptive agent showing good adsorptivity and low electrical resistivity, adding 1 to 30 wt. percent of the active carbon into a carbon-plastics composition comprising a base synthetic resin material or matrix such as high-density polyethylene, normal chain type low-density polyethylene, polypropylene or ethylene-propylene copolymer, carbon black and graphite, and forming the mixture to a product of desired shape. The composition is heated in a pressure kneader with an initial temperature of 180° C, kneaded thoroughly, pre-heated at 150 to 170° C and formed to an electrode of desired shape by using a heating press machine at a pressure of 100 kg/cm$^2$. The electrode was tested and the extent of halogen diffusion was measured with a device shown in Fig. 3. The results show that an electrode comprised of active carbon and the aforementioned basic composition has properties superior to those of electrodes formed from the previously proposed carbon plastics.

Referring to the measurement unit shown in Fig. 3, the numeral 21 designates a disk-shaped sample sheet having a liquid contact surface 20 mm diameter and 1 mm thickness. The numeral 23 designates a vessel containing 25 ml of an electrolyte 27 containing no bromine (3 mol of $ZnBr_2$ per liter of aqueous solution), and the numeral 24 a vessel containing 25 ml of an electrolyte 26 containing bromine (3 mol of $ZnBr_2$ per liter and 3 mol of $Br_2$ per liter of aqueous solution). The numeral 22 designates a packing, the numeral 25 a tightening bolt and the numeral 28 a cap adapted for preventing vaporization of the electrolyte.

In operation, the electrode sheet 21 is introduced into the vessel 23. The vessel 24 is tightened in a leakage free manner with the aid of the packing 22 and the tightening bolt 25. The electrolyte 26 containing bromine and the electrolyte 27 containing no bromine are introduced to the same level to eliminate the difference in liquid head. After lapse of a predetermined time, the amount of bromine ($Br_2$) diffused from the electrolyte 26 into the electrolyte 27 is measured with the aid of iodmetry.

As will be seen from the text hereinbelow, the present electrode made from electrically-conductive plastics material in turn formed from the carbon-plastics composition and active carbon shows an electrical resistivity equal to 0.1 to 0.11 ohm cm as electrode characteristics which represents about 60 percent of the resistivity of the comparison electrode of carbon-plastics material. The electrode according to the present invention also showed a tensile strength equal to 3.70 to 3.75 x $10^6$ kg/m$^2$ (370 to 375 kg/cm$^2$) which is higher by about 25 percent than the value for the comparison electrode. When immersed for 500 hours in a 95%-bromine liquid at room temperature, the inventive electrode showed a reduction of only 3 to 4 percent in its total strength and an increase of only 3 to 6 percent in its resistivity. The inventive electrode also showed markedly reduced bromine diffusion as compared with the conventional electrode, as shown in Fig. 4, which shows the data obtained by using the aforementioned measurement unit. The inventive electrode may therefore be used with advantage as an electrode made from electrically-conductive plastics material.

In consideration of the electrical conductivity of the electrode and the mechanical strength and workability, 1 to 30 wt. percent of active carbon is included in the composition as adsorbant. The amount of the graphite may be adjusted correspondingly. Active carbon may be pulverulent or granular, and may be in the pelletized, crushed, granulated powder or spherical form, activated with steam or chemicals.

The present battery component, formed from electrically conductive plastics material with added active carbon, has the following advantages:

(i) It is formed and composed of synthetic resin material, carbon black, graphite and active carbon as a result of which it is capable of suppressing diffusion through it of the halogen active material, such as bromine. The result is a much improved energy efficiency of the storage battery.

(ii) Diffusion of halogens (such as bromine) through the electrode is reduced so that the electrode plate is freed from the aggressive action of the halogens, resulting in an extension in the life time of the electrode.

(iii) The effect discussed in item (ii) may also be obtained with the end electrode plate and the outer battery casing.

(iv) The inventive material may be manufactured at reduced costs and used advantageously not only with the metal-halogen battery such as bromine-zinc or chlorine-zinc battery but with other batteries making use of electrodes made from electrically conductive plastic complex material or electrodes designed for use with electrochemical reactions.

The present invention will be described further by referring to the Examples below.

In evaluation, reference samples of dumbbell shape (thickness about 1 mm) were prepared in accordance with JIS Z 1703 and their tensile strength was measured with the use of a tensile tester. The relation between the tensile strength of the tested sample and that of the untested sample was expressed in terms of the tensile strength retention ratio (percent).

The test is the accelerated degradative test in which each sample was immersed in 94%-bromine solution for 1000 hours at room temperature.

The names and certain physical properties of the synthetic resin material (A), electrically-conductive carbon black (B) and the inorganic filler (C) used in the Examples and Comparative Examples are shown in the following Table 1.

Table 1. Names and Properties of Components

| | | Commercial Name | Maker | Physical Properties | | | | Ex. No. | Comp. Ex. No. |
|---|---|---|---|---|---|---|---|---|---|
| | | | | Density (g/cm³) | m.p (°C) | Softing point (°C) | MFR (g/10 min) | | |
| Synthetic resin material (A) | Polyethylene | $A_1$ | 5000 SF | Mitsui Sekiyu Kagaku K.K. | 0.959 | 132 | | 0.75 | 1-(1) 3-(2) 7-(3) | 1-1, 4-3 |
| | | $A_2$ | FX0860 | Showa Denko K.K. | 0.953 | | 129 | 0.8 | 1-(4) 3-(5) 7-(2) | 1-2, 4-2 |
| | | $A_3$ | S6008 | " | 0.958 | | 129 | 0.8 | 3-(1) 6-(4) 6-(5) | |
| | | $A_4$ | Stafren E908(F) | Nippon Sekiyu Kagaku K.K. | 0.950 | 129 | | 0.08 | 6-(1) 6-(6) | 3-1 |
| | | $A_5$ | Stafren E703 | " | 0.961 | 129 | | 0.3 | 6-(2) | |
| | | $A_6$ | Showrex S6006M | Showa Denko K.K. | 0.957 | | 128 | 0.5 | 6-(3) 6-(7) | |
| | | $A_7$ | Showrex S4002 | " | 0.935 | | 119 | 0.2 | | 3-2 |
| | | $A_8$ | M850 | Chisso K.K. | 0.963 | 132 | | 5.3 | 8-(1) 8-(2) 8-(3) | 5-1 |

EP 0 190 772 B1

Table 1. (Continued)

| | | | Commercial Name | Maker | Physical Properties | | | | Ex. No. | Comp. Ex. No. |
|---|---|---|---|---|---|---|---|---|---|---|
| | | | | | Density (g/cm³) | m.p (°C) | Softing point (°C) | MFR (g/10 min) | | |
| Synthetic resin material (A) | polypro pyren | A₉ | MS 230 | Tokuyama Soda K.K. | 0.91 | 150 | | 4 | 1-(2) 3-(3) 5 7-(4) | 4-4 |
| | ethyrene -propylen -co -polymer | A₁₀ | MS 660 | " | 0.9 | 150 | | 15 | 1-(3) | |
| | | A₁₁ | MS 640 | " | 0.9 | 150 | | 6.5 | 3-(4) | |
| | | A₁₂ | MS 624 | " | 0.9 | 150 | | 2 | 7-(1) | 4-1 |
| | phenol denatured oil vanish | A₁₃ | #120B | Union Kasei K.K. | - | - | | - | 2  4 | 2 |
| elec. cond. carbon black (B) | | | | | Absorption (ml/100g) | N₂ Surface Area (m²/g) | | | | |
| | | B₁ | CONDUCTEX -975 | Columbia Carbon K.K. | 160 | 270 | | | 1-(1) 3-(4) 7-(3) | 4-3 |
| | | B₂ | Ketchen Black EC | Lion Acso K.K. | 350 | 950 | | | 1-(2) 1-(4) 2 3-(1) 3-(2) 3-(5) 4 5 6-(2) 6-(4) 6-(5) 8-(1)-(3) | 3-2 5-1 |

EP 0 190 772 B1

Table 1. (Continued)

| | | | Commercial Name | Maker | Absorption (ml/100g) | $N_2$ Surface Area $(m^2/g)$ | Ex. No. | Comp. Ex. No. |
|---|---|---|---|---|---|---|---|---|
| Elec. cond. carbon black (B) | | $B_3$ | VULCAN XC -72 | Cabot | 166 | 272 | 1-(3) 3-(3) 6-(3) 6-(7) 7-(2) 7-(4) | 1-2 4-2 4-4 |
| | | $B_4$ | CONDUCTEX -950 . | Nippon Columbia K.K. | 175 | 245 | 6-(1) 6-(6) 7-(1) | 3-1 4-1 |
| inorganic filler (C) | Graphite | $C_1$ | #200 | Tokai Carbon K.K. | particle size 77 μm (-200 mesh) | | 1-(1) 1-(2) 1-(3) 1-(4) 2, 5 8-(1) 8-(2) 8-(3) | 1-1 2 5-1 |
| | Doped graphite | $C_{1-1}$ | #200 | " | bromine dopant liquid | | 3-(1) | |
| | | $C_{1-2}$ | #200 | " | iodine acetone solution | | 3-(2) | |
| | | $C_{1-3}$ | #200 | " | 3 mol iodine chloride/1 lit. methanol | | 3-(3) | |
| | | $C_{1-4}$ | #200 | " | iodine bromide | | 3-(4) | |
| | | $C_{1-5}$ | #200 | " | sulfuric acid | | 3-(5) | |
| | | $C_{1-6}$ | #200 | " | nitric acid | | 4 | |
| | | $C_{1-7}$ | #200 | " | arsenic fluoride (V) | | 5 | |

EP 0 190 772 B1

Comparative Example 1

The starting materials of the following composition were injected into a pressure kneader heated to 160° C and were kneaded for 15 minutes. The kneaded materials were formed by calender rolls to sheets 1 mm thick and the electrical conductivity as well as tensile strength of the resulting samples were measured. The results are shown in the Table 3.

| Test No. | 1-(1) | 1-(2) | 1-(3) | 1-(4) |
|---|---|---|---|---|
| synth. resin mat. | $A_1$, 60% | $A_9$, 65% | $A_{10}$, 55% | $A_2$, 50% |
| elec. cond. carb. black | $B_1$, 10% | $B_2$, 5% | $B_3$, 15% | $B_2$, 5% |
| inorgan. filler | $C_1$, 30% | $C_1$, 30% | $C_1$, 30% | $C_1$, 45% |

Comparative Example 2

Synthetic resin paint $A_{13}$ (55 wt. percent of the total) was introduced into a three-roll calender and conductive carbon black $B_2$ (10 wt. percent) with graphite $C_1$ (35 wt. percent) was gradually added thereto. The resulting mixture was kneaded to an electrically conductive paint and the properties of the resulting samples were measured. The results are shown in Table 3.

Comparative Example 3

The materials of the composition shown below were kneaded as in Comparative Example 1. The properties of the resulting samples are shown in Table 3.

| Test No. | 1 - 1 | 1 - 2 |
|---|---|---|
| synth. resin mat. | $A_1$, 50% | $A_2$, 50% |
| elec. cond. carbon black | - | $B_3$, 10% |
| inorg. filler (graphite) | $C_1$, 50% | - |

Comparative Example 4

9

The starting material consisting of 60 wt. percent of the synthetic resin material $A_{13}$ and 40 wt. percent of graphite $C_1$ were kneaded in the manner as described in Comparative Example 2 and the properties of the resulting samples were measured. The results are shown in Table 3.

Comparative Example 5

A pressure kneader consisting of a ceramic mixer tank was set to $150°C$ and the starting materials consisting of polyolefine synthetic resin material (A), carbon black (B) and doped graphite (C) were kneaded under kneading conditions $\alpha$, $\beta$ and the kneaded materials were pressed by calender rolls into sheets each 1 mm thick. The properties of the resulting sheets as measured are shown in Fig. 3.

Doped samples were obtained by immersing powdered graphite in a dopant for 20 hours. Excess dopant was removed by allowing the graphite to stand for 4 to 5 hours in a draught at room temperature after the graphite was removed from the liquid. The $\alpha$ condition refers to kneading in which the components A and B are kneaded for 10 minutes, then the component C is added to the resulting kneaded product and the resulting product with additive C is kneaded for 2 minutes, and the $\beta$ condition to kneading in which a mixture of the components A, B and C are kneaded together for 15 minutes. The dopants used are also shown in Table 2.

## Table 2

### Composition and Kneading Conditions
### (the numeral is weight percent)

| | Test No. | 5 - (1) | 5 - (2) | 5 - (3) | 5 - (4) | 5 - (5) |
|---|---|---|---|---|---|---|
| composition | synth. resin mat. (A) | $A_3$, 60 | $A_1$, 50 | $A_9$, 50 | $A_{11}$, 50 | $A_2$, 60 |
| | carbon black (B) | $B_2$, 10 | $B_2$, 10 | $B_3$, 30 | $B_1$, 30 | $B_2$, 10 |
| | doped graphite (C) | $C_{1-1}$, 30 | $C_{1-2}$, 40 | $C_{1-3}$, 20 | $C_{1-4}$, 20 | $C_{1-5}$, 30 |
| dopant | | bromine liquid | iodine aceton solution | iodine chloride 3 mol in 1 methanol | iodine bromide (50°C) | sulfuric acid |
| knead. cond. | | $\alpha$ | $\beta$ | $\alpha$ | $\alpha$ | $\beta$ |

Comparative Example 6

Graphite $C_{1-6}$ was obtained by the doping treatment as described in Comparative Example 5 with use of nitric acid as dopant. Synthetic resin paint $A_{13}$ (50 wt. percent) was introduced into a three-roll calender as in Comparative Example 2. To the resulting product were gradually added 25 wt. percent of carbon black ($B_2$) and 25 wt. percent of doped graphite ($C_{1-6}$).

The resulting mixture was kneaded to an electrically conductive paint and the properties of the latter were measured. The results are shown in Table 3.


Comparative Example 7

Powders of graphite $C_1$ were introduced in a stainless steel vessel, from which the air was evacuated. Arsenic fluoride (V) was introduced into the vessel to a pressure of 250 mm Hg. Doping was carried out at this pressure for 5 days. 30 wt. percent of polypropylene ($A_9$) and 5 wt. percent of carbon black ($B_2$) were introduced into the pressure kneader of the Comparative Example 5 and kneaded for 10 minutes. To the resulting kneaded product were added 65 wt. percent of the doped graphite $C_{1-7}$. The resulting mixture was kneaded for two minutes and prepared into a sheet, 1 mm thick the properties of which were then measured. The results are also shown in Table 3.

Table 3

Properties of the Ultimate
Plastic-Complex Materials

| Comparative Example No. | Sample Form | Electric Conductivity $ohm^{-1} cm^{-1}$ | Tensile Strength $(kg/m^2 \times 10^{-6})$ |
|---|---|---|---|
| 1-(1) | sheet | 5 | 390 |
| 1-(2) | " | 6.5 | 450 |
| 1-(3) | " | 4 | 400 |
| 1-(4) | " | 6.5 | 460 |
| 2 | liquid | 10 | 0.23 Ns/m² (2.3 poise) (30°C) |
| 3-1 | sheet | $10^{-17}$ | 370 |
| 3-2 | sheet | $5 \times 10^{-3}$ | 380 |
| 4 | liquid | $10^{-17}$ | 0.15 Ns/m² (1.5 poise) (30°C) |
| 5-(1) | sheet | $5 \times 10^2$ | 360 |
| 5-(2) | sheet | $2 \times 10^2$ | 310 |
| 5-(3) | sheet | $9 \times 10^2$ | 350 |
| 5-(4) | sheet | $7 \times 10^2$ | 350 |
| 5-(5) | sheet | $5 \times 10^2$ | 330 |
| 6 | liquid | $8 \times 10^3$ | 0.36 Ns/m² (3.6 poise) (30°C) |
| 7 | sheet | $2 \times 10^3$ | 290 |

It is seen from the results shown in the above Table that a significant improvement in electrical conductivity over the conventional material and comparable mechanical behaviour, results from the use of graphite and carbon black simultaneously, although the amount of additives to the synthetic resin material is same as used in the conventional electrically conductive material.

Example 8

High-density polyethylene was used as base synthetic resin material to which were added carbon black and graphite to provide a basic composition to which was added pulverulent active carbon to provide the composition shown in Table 4. This electrode composition was kneaded thoroughly in a pressure kneader at an initial temperature of 180° C and for 3 minutes at 60 rpm, and then kneaded for 12 minutes at 90 rpm. The kneaded material was clamped between heat press mold halves, pre-heated at 150 to 170° C for 5 minutes, then pressed for 5 minutes at 1 x 10⁶ kg/m² (100 kg/cm²) to an electrode sheet 1 mm thick.

The electrode thus obtained may be used in a bromine-zinc battery as typical of the secondary battery and diffusion of bromine as its active material was measured with the test piece of electrode by the device shown in Fig. 3 in the manner described above. The results are shown in Fig. 4.

It is seen from this figure that bromine diffusion differed markedly depending on whether active carbon has been added or not and that bromine diffusion is lowest with Shirasagi A No. 8-(1), and proceeds through a medium value with Shirasagi M No. 8-(2) to a maximum value with Carbo-Raffin No. 8-(3).

Table 4. Electrode Composition

| Test No. | Electrode Composition (wt. %) | | | | |
| --- | --- | --- | --- | --- | --- |
| | basic composition | | | active carbon | kind of active carbon |
| | *1 synthetic resin material $A_8$ | *2 composition carbon black $B_2$ | *3 graphite $C_1$ | | |
| Ex 8-(1) | 50 | 20 | 20 | 10 | powdered active carbon Shirasagi A (manuf. by Takeda Yakuhin Kogyo K.K.) |
| Ex 8-(1) | 50 | 20 | 20 | 10 | powdered active carbon Shirasagi M (manuf. by Takeda Yakuhin Kogyo K.K.) |
| Ex 8-(3) | 50 | 20 | 20 | 10 | powdered active carbon Carbo-Raffin (manuf. by Takeda Yakuhin Kogyo K.K.) |
| Comp Ex. 7-1 | 50 | 20 | 30 | - | |

*1 Polyethylene; density 0.963 g/cm², melting point 132°C: MFR g/10 min.

*2 Carbon black; Ketchen Black EC (Lion Acso)

*3 Graphite; G-200 under (Tokai Carbon)

Next, electrode test samples No. 8-(1) - (3) and No. 7-1 were immersed in 95% bromine solution for 500 hours at room temperature and changes caused in tensile strength and volume resistivity were measured. The results are shown in Table 5 below.

Table 5. Electrode Characteristics

| Test No. | Tensile Strength Kg/m²×10⁻⁴ (kg/cm²) | | | volume resistivity (Ω·cm) | | |
|---|---|---|---|---|---|---|
| | initial | after 500 hrs | reduction rate (%) | initial | after 500 hrs | increase rate (%) |
| Ex. 8-(1) | 375 | 363 | 3.2 | 0.105 | 0.109 | 3.8 |
| Ex. 8-(2) | 373 | 361 | 3.1 | 0.106 | 0.110 | 3.8 |
| Ex. 8-(3) | 375 | 361 | 4.0 | 0.105 | 0.111 | 5.7 |
| Comp. Ex. 7-1 | 300 | 257 | 14.3 | 0.174 | 0.200 | 14.9 |

As shown in Table 5, the electrode with added active carbon differs markedly in its tensile strength reduction rate and volume resistivity increase rate from the electrode without added active carbon. In addition, the electrode with added active carbon has a higher tensile strength and a lower volume resistivity characteristics of high-quality electrodes.

14

**Claims**

1. An electrode for a metal-halogen battery made from an electrically conductive plastics material comprising a synthetic base resin polymer, carbon black and graphite, the base resin polymer being selected from polyethylene, polypropylene and an ethylene-propylene copolymer, characterized in that: the base resin polymer is present in an amount of from 30% to 70% by weight; the carbon black is present in an amount of from 5% to 40% by weight; at least some of the graphite is replaced by adsorptive active carbon for controlling halogen diffusion through the electrode; and the adsorptive active carbon is present in an amount of from 1% to 30% by weight.

2. An electrode as claimed in claim 1 and characterised in that: the base resin polymer is present in an amount of 50% by weight; and the carbon black is present in an amount of 20% by weight.

3. An electrode as claimed in claim 2 characterised in that the base resin polymer, carbon black, graphite and adsorptive active carbon have a weight ratio of about 50:20: 20:10.

4. An electrode as claimed in claim 1, 2 or 3, characterised in that the active carbon is a powder selected from pulverulent, granulated or crushed powder or spherical carbon and in that the active carbon is chemically or steam-activated.

5. A metal-halogen battery including a battery component as claimed in any one of the preceding claims.

6. A battery as claimed in claim 5 characterised in that it is a metal-bromine battery.

**Revendications**

1. Electrode pour un élément électrochimique métal-halogène fabriquée à partir d'une matière plastique électriquement conductrice comprenant une résine polymère de base synthétique, du noir de carbone et du graphite, la résine polymère de base étant sélectionnée dans le groupe constitué par polyhétylène, le polypropylène et les copolymères étylène-propylène, caractérisée en ce que:
   - la résine polymère de base est présente avec une proportion de 30 à 70% en poids ;
   - le noir de carbone est présent dans une proportion de 5 à 40% en poids ; au moins une partie du graphite est remplacée par du carbone actif adsorbant en vue de contrôler la diffusion d'halogène à travers l'électrode ; et le carbone actif adsorbant est présent dans une proportion de 1 à 30% en poids.

2. Electrode selon la revendication 1, caractérisée en ce que la résine polymère de base est présente dans une proportion de 50% en poids ; et
   - le noir de carbone est présent dans une proportion de 20% en poids.

3. Electrode selon la revendication 2, caractérisée en ce que la résine polymère de base, le noir de carbone, le graphite et le carbone actif adsorbant présentent un rapport en poids d'environ 50:20:20:10.

4. Electrode selon la revendication 1, 2 ou 3, caractérisée en ce que le carbone actif est une poudre choisie dans le groupe constitué par la poudre pulvérulente, granulée ou concassée ou du carbone sphérique et en ce que le carbone actif est activé chimiquement ou par de la vapeur.

5. Elément électrochimique métal-halogène comprenant un composant selon l'une quelconque des revendications précédentes.

6. Elément électrochimique selon la revendication 5, caractérisé en ce qu'il est constitué par un élément electrochimique métal-brome.

**Ansprüche**

1. Elektrode für eine Metall-Halogen-Batterie aus einem elektrisch leitfähigen Kunststoffmaterial, welches ein Basis-Syntheseharz-Polymer, Ruß und Grafit umfaßt, wobei das Basis-Syntheseharz-Polymer ausgewählt ist unter Polyethylen, Polypropylen und Ethylen-Propylen-Copolymer, dadurch **gekennzeichnet**, daß
das Basisharz-Polymer in einem Anteil zwischen 30 und 70 Gew.-% vorliegt;
der Ruß in einem Anteil zwischen 5 und 40 Gew.-% enthalten ist; wobei zumindest etwas von dem Grafit durch adsorbierende Aktivkohle zwecks Kontrolle der Halogen-Diffusion durch die Elektrode ersetzt ist, wobei der Anteil der adsorbierenden Aktivkohle zwischen 1 und 30 Gew.-% beträgt.

2. Elektrode nach Anspruch 1,
dadurch **gekennzeichnet**, daß
der Anteil des Basisharz-Polymers 50 Gew.-% und der Anteil des Rußes 20 Gew.-% beträgt.

3. Elektrode nach Anspruch 2,
dadurch **gekennzeichnet**, daß
das Gewichtverhältnis zwischen dem Basisharz-Polymer, dem Ruß, dem Grafit und der adsorbierenden Aktivkohle ca. 50:20:20:10 beträgt.

4. Elektrode nach Anspruch 1 - 3,
dadurch **gekennzeichnet**, daß
die Aktivkohle ein Pulver ist, welches ausgewählt ist unter einem feinpulverigen, gekörnten, granulierten bzw. gemahlenen Pulver oder kugelförmigem Kohlenstoff, und daß die Aktivkohle chemisch oder mittels Dampf aktiviert ist.

5. Metall-Halogen-Batterie, welche eine Batteriekomponente gemäß einem der vorangehenden Ansprüche enthält.

6. Batterie nach Anspruch 5,
dadurch **gekennzeichnet**, daß
sie eine Metall-Brom-Batterie ist.

# FIG. 1

# FIG. 2

## FIG. 3

## FIG. 4